# EUROPÄISCHE PATENTSCHRIFT

(11) **EP 0 331 070 B1**
(45) Veröffentlichungstag und Bekanntmachung des Hinweises auf die Patenterteilung: **05.05.1993**
(21) Anmeldenummer: 89103393.8
(22) Anmeldetag: 27.02.1989
(51) Int. Cl.: A01B 51/02, A01D 27/00

(54) **Landwirtschaftliches Mehrzweckfahrzeug**
Multi-purpose agricultural vehicle
Véhicule agricole polyvalent

(30) Priorität: 04.03.1988 DE 3807073; 28.05.1988 DE 3818200
(43) Veröffentlichungstag der Anmeldung: 06.09.1989
(73) Patentinhaber: Horsch Maschinen GmbH, D-92421 Schwandorf (DE)
(72) Erfinder: Horsch, Michael, D-8460 Schwandorf (DE)
(74) Vertreter: Wasmeier, Alfons, Dipl.-Ing.

(56) Entgegenhaltungen:
- CH-A- 261 893
- DE-A- 2 149 480
- DE-A- 2 443 915
- DE-A- 3 401 660
- FR-A- 2 423 972
- US-A- 4 693 331

## Beschreibung

Die Erfindung betrifft ein landwirtschaftliches Mehrzweckfahrzeug bzw. einen Spezialrahmen für ein derartiges Mehrzweckfahrzeug nach dem Oberbegriff des Anspruches 1, das für die verschiedensten Einsatzzwecke umrüstbar ist und das insbesondere zum Ernten von Zuckerrüben einsetzbar ist.

Derartige Fahrzeuge sind in verschiedenen Konzeptionen und Ausführungen bekannt. So ist z.B. aus der DE-OS 24 43 915 (Weichel) ein Fahrzeug dieser Art bekannt, bei dem in mindestens vier verschiedenen Anbauräumen Vorrichtungen zum Anbauen von Arbeitsgeräten angebracht sind, die Spurweite des Fahrzeuges gleich oder größer 2 m gewählt ist, die Bodenfreiheit etwa 0,7 m beträgt, vier gleichgroße Räder mit einem Durchmesser von mindestens 1,0 m vorgesehen sind, die Arbeitsbreite wesentlicher Arbeitsgeräte gleich der jeweiligen Spurbreite oder einem Mehrfachen derselben ist, mindestens eine vordere, eine mittlere bzw. seitliche und eine hintere Zapfwelle vorhanden ist, und das mit verschiedenen zusätzlichen Vorrichtungen ausrüstbar ist, z.B. Ladepritschen, Laderäumen mit Ladegerät, Pumpfaß, Sammelbunker oder dergl.

Des weiteren ist aus der DE-OS 34 01 660 (Holmer) ein Mehrzweck-Schlepperfahrzeug bekannt welches alle Merkmale des Oberbegrifes aufweist, und somit das Heck- und Fronthydraulik sowie Heck- und Frontzapfwelle aufweist, bei dem der Fahrzeugrahmen die Fahrerkabine am vorderen Ende, Wechselaufbauten im mittleren und hinteren Bereich des Fahrzeuges sowie Front- und Heckanbaugeräte aufnimmt, der Fahrzeugrahmen und die einzelnen Aufbauten miteinander zusammenwirkende Schnellwechseleinrichtungen besitzen, am Fahrzeugrahmen und/oder an den Anbaugeräten Befestigungsvorrichtungen für die Aufnahme einer unterhalb der Radachsen des Fahrzeuges von vorne nach hinten zwischen den Rädern verlaufenden Fördervorrichtung vorgesehen sind, und Frontzapfwelle sowie Fronthydraulik vor dem Fahrzeug ein Anbaugerät, z.B. ein Erntegerät für landwirtschaftliches Gut, das das geerntete Gut auf die Fördervorrichtung übergibt, aufnehmen kann.

Derartigen bekannten Fahrzeugen gemeinsam sind die Nachteile, daß der Rahmen als Rechteckrahmen bzw. in Form zweier im Abstand voneinander angeordneter und vorne und hinten miteinander verbundener Träger ausgebildet ist, dessen Breite eine kompakte Bauweise in bezug auf die Breitenabmessung des Fahrzeuges verhindert, daß der relativ breite Rahmen die Verwendung überbreiter Hinterradreifen, die den Bodendruck des Gesamtfahrzeuges reduzieren, verhindert, da die Rahmenhöhe entweder größer ist als der Durchmesser der Räder, oder da die Räder in axialer Richtung im Abstand von der Außenbegrenzung des Rahmens nach außen versetzt angeordnet sind, daß die Motor-Getriebeeinheit unterhalb des Rahmens in relativ großer Längserstreckung (Motor-Schaltgetriebe-Verteilergetriebe in Längserstreckung des Fahrzeuges) angeordnet ist, wodurch eine geringe Bauhöhe des Rahmens verhindert wird, daß die Vorderachse starr und die Hinterachse gelenkt ist, wodurch die Beweglichkeit des Fahrzeuges beeinträchtigt ist, etc.

Aus der CH-A- 261 893 ist ein landwirtschaftliches Fahrzeug mit einem Einachstriebwerk bekannt, das Motor, Getriebe, Radachse, zwei Triebräder, Sattel, Lenkeinrichtung und Lenksäule aufweist, und das mit einem zweirädrigen Vorderwagen über eine Klemmvorrichtung verbunden ist. Damit soll erreicht werden, daß die Vorteile eines Zweiachs-Schleppers auch mit einachsigen Kleintriebwerken erzielt werden. Dies wird bei dem bekannten Vorschlag dadurch erreicht, daß am Triebwerk eine Klemmvorrichtung vorgesehen ist, die mit einem vor der Achse laufenden zweirädrigen Vorderwagen lösbar verbunden ist. Der Vorderwagen weist ein Zentralrohr auf, das die Antriebsverbindung vom Getriebe zu einer Mähvorrichtung aufnimmt. Ein derartiges Fahrzeug stellt einen völlig anderen Fahrzeugtyp als im Falle der Erfindung dar, nämlich ein Fahrzeug mit einachsigem Vorderwagen und mit einachsigem Triebwerk, die beide miteinander koppelbar sind, bei denen das Triebwerk aber auch ohne Vorderwagen betrieben werden kann. Der Vorderwagen enthält das Zentralrohr, das kein Tragrahmen ist, sondern die Kraftübertragungswelle für das Mähwerk aufnimmt. Der Rahmen des Wagenkastenaufbaus ist im vorderen Bereich über eine Stütze auf dem Zentralrohr befestigt und im hinteren Bereich seitlich über Stützorgane aufliegend angeordnet. Die Stütze ist somit nur eine Auflage, und der Aufbau würde, wäre er auf dem Zentralrohr allein gelagert, instabil, abgesehen davon, daß ein Zentralrohr zur Aufnahme sehr hoher Lasten nicht geeignet ist.

Aus der US-A- 46 93 331 ist ein Tragrahmen in Form eines Trägers bekannt, der sich vom Vorderende des Fahrerhauses ausgehend nach vorne erstreckt. Dieser Tragrahmen ist als Hohlprofilträger, also relativ schmal ausgebildet; der Träger verläuft jedoch in einer Höhe und ist so ausgelegt, daß er erheblich über den Rädern liegend Arbeitsgeräte aufnehmen kann, die ausschließlich unterhalb des Tragrahmens angeordnet sind. Dieser Tragrahmen ist somit ein Frontausleger, der als Geräteträger dient.

Es ist für gattungsgemäße Mehrzweckfahrzeuge hoher Leistung entscheidend für die Bewährung im praktischen Einsatz, daß
1. der Bodendruck so gering wie möglich gehalten wird, also das auf die Räder verteilte Gewicht durch möglichst geringes Leergewicht und optimale Gewichtsverteilung des Zusatzgewichtes bei eventuellem Ladebetrieb so gering wie möglich gehalten wird und in Zusammenhang damit der von den Rädern übertragene Bodendruck durch möglichst große Auflagefläche der Räder auf dem Boden ein Minimum wird;
2. die Lenkbarkeit und Beweglichkeit des Fahrzeuges optimal ist, damit ein voll beladenes Fahrzeug mit sehr hohem Gewicht (Bunkerkapazität > 6 t) mobil und gut manövrierbar ist,
3. eine einfache Umrüstung des Fahrzeuges von einem Einsatzzweck in einen anderen sowie auch eine Auswechselbarkeit der Antriebseinheit für Fahrzeuge unterschiedlicher Motorleistung gewährleistet ist.

Aufgabe der Erfindung ist es demzufolge, ein Fahrzeug der gattungsgemäßen Art so weiterzubilden, daß es extrem einfach, effektiv und billig hergestellt werden kann, daß es optimale Beweglichkeit und Lenkbarkeit sowie minimalen Bodendruck hat, daß es variabel im Einsatz ist, insbes. für das Rübenernten und -bunkern geeignet ist, und daß eine optimale Gewichtsverteilung des Fahrzeuges im Leerbetrieb und im voll beladenen Betrieb (z.B. bei Rübenbunkerung) sichergestellt ist.

Gemäß der Erfindung wird diese Aufgabe bei einem Fahrzeug nach dem Oberbegriff des Anspruches 1 mit der Kombination der Merkmale nach dem Kennzeichen des Anspruches 1 erzielt.

Weitere Ausgestaltungen der Erfindung sind Gegenstand der Unteransprüche.

Das erfindungsgemäße Mehrzweckfahrzeug hat gegenüber allen zum Stande der Technik bekannten vergleichbaren Fahrzeugen entscheidende Vorteile, da durch die Kombination der unterschiedlichen, teilweise bereits an sich bekannten Merkmale ein optimales Fahrzeug erreicht wird, das z.B. im Gegensatz zu dem Fahrzeug nach DE-OS 24 43 915 den Forderungen der Praxis entspricht, sowohl von der Mobilität als auch vom Preis den Forderungen des Marktes entspricht und den entscheidenden Nachteil vergleichbarer bekannter Fahrzeuge vermeidet, nämlich den relativ hohen Bodendruck, der zu einer unzulässigen Bodenverdichtung führt.

Der Hohlprofilrahmen in Form eines Torsionsträgers ist als durchgehender Rahmen mit einer Abmessung von maximal 50 x 50 cm ausgebildet. Dies ermöglicht bei Verwendung einer Gesamtfahrzeugbreite von ca. 2,9 - 3,1 m, daß die Hinterräder mit einer Bereifung ausgebildet werden können, die eine Breite zwischen 0,9 und 1,3 m hat, d.h. daß die Kontaktfläche der Hinterreifen mit dem Erdboden extrem groß ist und damit der Bodendruck extrem niedrig gehalten werden kann. Gleichzeitig ist es damit möglich, die Hinterreifen mit einem Durchmesser von 1,6 m oder darüber auszubilden, weil der den Rahmen bildende Längsträger zwischen den Hinterrädern platzsparend angeordnet werden kann und damit eine nur in der Mitte durch den schlanken Längsträger unterbrochene durchgehende Hinterradwalze entsteht. Die Hinterradachse ist lenkbar und starr, also nicht gefedert, ausgebildet, wodurch das Aufsetzen von Aufbauten vereinfacht und der Schwerpunkt geringer gesetzt werden kann, während die Vorderradachse gelenkt und als Pendelachse ausgebildet ist. Dies ergibt eine entscheidende Verbesserung in der Lenkbarkeit des Fahrzeuges, da die Vorderräder mit einer Breite von 0,6 - 0,9 m ausgebildet sind, also erheblich schmaler als die Hinterradreifen. Vorder- und Hinterradachse sind angetrieben.

Ein weiterer wesentlicher Vorteil der Erfindung gegenüber bekannten vergleichbaren Vorschlägen wird dadurch erreicht, daß der unmittelbar hinter der Fahrerkabine angeordnete Motor mit Getriebe in Querbauweise auf den Längsprofilträger aufgesetzt ist; dies ergibt in Längsrichtung des Fahrzeuges eine extrem kurze Bauweise und trägt zu einer ausgeglichenen Gewichtsverteilung am Gesamtfahrzeug bei - Fahrerkabine und Motor mit Getriebe sind unmittelbar über bzw. möglichst knapp hinter der Vorderachse angeordnet. Bei einer Variante der Erfindung ist das Fahrerhaus auf einer Seite und die Motor-Getriebeeinheit neben dem Fahrerhaus auf der anderen Seite des Längsträgers angeordnet, beide wiederum unmittelbar über der Vorderradachse; bei einer derartigen Ausführungsform läßt sich eine weitere Verringerung des Platzbedarfes in Richtung der Längsachse des Fahrzeuges erzielen. Die Aufsattelfläche des Fahrzeuges, die den gesamten Raum hinter dem Fahrerhaus bzw. hinter der Motor-Getriebeanordnung einnimmt, ist in bezug auf die Hinterradachse so angeordnet, daß das Gewicht des z.B. aufgesattelten Bunkers mit Ladung voll auf die Hinterradachse wirkt. Dieses hohe Gewicht wird durch die extrem breiten und extrem hohen Hinterradreifen mit einem relativ geringen Druck pro Flächeneinheit auf den Boden übertragen und damit der Bodendruck auf einem vernünftigen und akzeptablen Wert gehalten.

Das Fahrzeug weist in an sich bekannter Weise auf der Vorderseite und der Rückseite Zapfwelle und Dreipunktaufhängung auf, so daß am Frontende des Fahrzeuges ein Rübenrodegerät oder eine entsprechende andere Bergungs- oder Bearbeitungseinrichtung aufgenommen werden kann. Im Falle eines Rüben-Rodegerätes erhält das Fahrzeug einen ebenfalls bekannten Förderer, der zwischen den beiden Vorderrädern unterhalb des Längsträgers nach hinten in eine Hubvorrichtung geführt ist, so daß die gerodeten Rüben über diese Fördervorrichtung und die Hubvorrichtung gebunkert werden können. Ebenfalls in an sich bekannter Weise ist das Fahrzeug mit Schnellwechseleinrichtungen versehen, die es ermöglichen, daß der Auf- und Abbau der Anbau- bzw. Aufsattelgeräte und -vorrichtungen problemlos und einfach vorgenommen werden kann.

Wenn das Fahrzeug so betrieben werden soll, daß die Hinterräder in Fahrtrichtung gegenüber den Vorderrädern versetzt, z.B. die Vorderräder in der ersten und dritten Furche und die Hinterräder in der zweiten und vierten Furche laufen, verläuft die Fahrzeuglängsachse im Winkel β zur Fahrtrichtung, und das am vorderen Ende des Fahrzeuges aufgenommene Bearbeitungsgerät, z.B. ein Rübenroder, ist um den gleichen Winkel β gegenüber seiner Normalstellung quer zur Längsachse des Fahrzeuges verdreht. Eine derartige Stellung ist für die Bearbeitung, z.B. das Rübenroden, nicht brauchbar, da die Rodewerkzeuge einwandfrei in Arbeitsrichtung verlaufen müssen. Aus diesem Grunde muß die Bearbeitungsvorrichtung am Fahrzeug so angeordnet sein, daß das am Vorderende des Fahrzeuges von Unterlenkern aufgenommene Bearbeitungsgerät im Winkel zur Fahrzeuglängsachse verstellbar ausgebildet ist. Vorzugsweise sind hierbei die Unterlenker in ihrer Länge relativ zueinander verstellbar ausgelegt, so daß das Bearbeitungsgerät wieder genau die Arbeitsposition einnimmt, in der die Bearbeitungswerkzeuge in Fahrtrichtung angeordnet sind, und der Verstellwinkel ausgeglichen ist, d.h. der Winkel β auf Null zurückgeführt wird.

Anstatt die Unterlenker in unterschiedlichem Maße verlängerbar auszulegen, kann die Anordnung auch so getroffen werden, daß der Längsträger des Fahrzeugrahmens im vorderen Bereich eine Gelenkstelle aufweist, die in Höhe oder hinter der Vorderradachse liegt, so daß der vordere Teil des Fahrzeugrahmens durch eine seitliche Versetzung der Hinterräder gegenüber den Vorderrädern nicht beeinflußt ist.

Bei Fahrzeugen der vorbeschriebenen Art mit Lenkachsen ist es erforderlich, den Abstand zwischen der Oberkante der Vorderreifen und der Unterkante der Fahrerkabine bzw. der Motor-Getriebe-Einheit ausreichend groß zu wählen, damit bei einer Radauslenkung, z.B. infolge von Bodenunebenheiten, ein Kontakt zwischen Reifen und darüber befindlichem Fahrzeugteil sicher vermieden wird. Dies bedeutet, daß Fahrerkabine und Motor-Getriebe-Einheit relativ hoch über dem Boden angeordnet werden müssen, was einer kompakten Bauweise des Fahrzeuges entgegensteht. Dieses Problem wird mit der Erfindung dadurch gelöst, daß Fahrerkabine, Motor-Getriebe-Einheit und Vorderachse des Fahrzeuges als eine feste bzw. starre Einheit ausgebildet sind und daß die Einheit als Ganzes schwenkbar bzw. drehbar um die Längsachse des Trägers oder Rahmens angeordnet ist bzw. der Träger oder Rahmen unterteilt ist und die beiden Trägerteile relativ zueinander um ihre gemeinsame Längsachse verdrehbar ausgebildet sind.

Nachstehend wird die Erfindung in Verbindung mit der Zeichnung anhand eines Ausführungsbeispieles erläutert. Es zeigt:

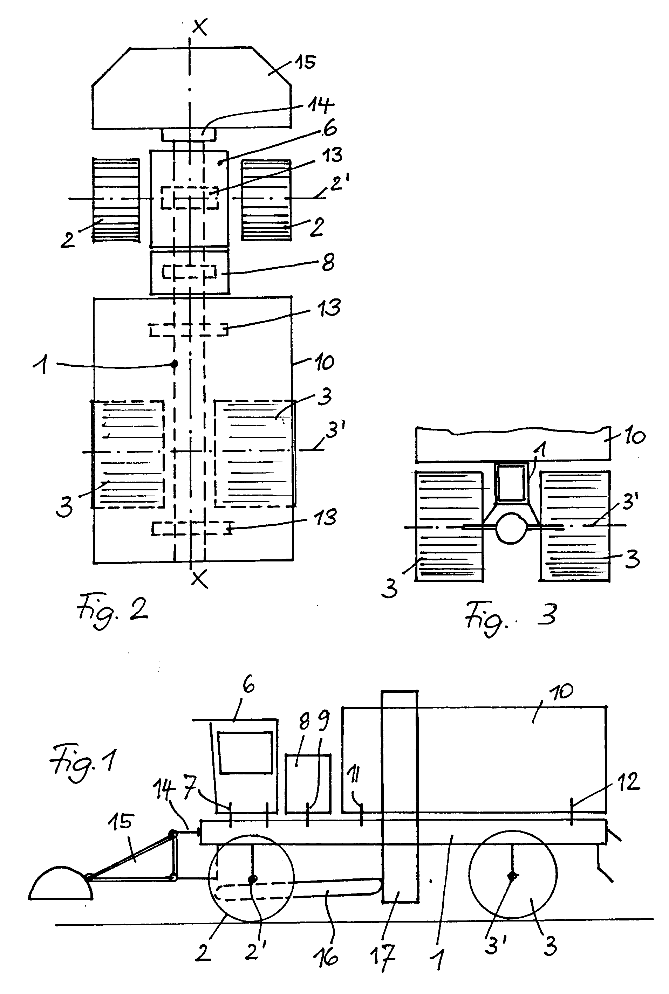

- Fig. 1: eine schematische Seitenansicht eines Fahrzeuges nach der Erfindung,
- Fig. 2: eine Aufsicht auf das Fahrzeug nach Fig. 1,
- Fig. 3: eine schematische Rückansicht des Fahrzeuges nach Fig. 1,
- Fig. 4 - 7: schematische Darstellungen eines Fahrzeuges nach der Erfindung, wobei die Hinterräder gegenüber den Vorderrädern im Arbeitseinsatz seitlich versetzt sind, und
- Fig. 8: eine schematische Darstellung einer weiteren Ausführungsform des erfindungsgemäßen Fahrzeuges.

Der Fahrzeugrahmen, der als Torsionsträger 1 in Form eines Hohlprofiles mit quadratischem oder rechteckförmigem Querschnitt mit maximaler Breite von 50 cm und einer Höhe von ebenfalls ca. 50 cm ausgebildet ist, ist kontinuierlich über die gesamte Längserstreckung ausgebildet und wird von einem Paar von Vorderrädern 2 sowie von einem Paar von Hinterrädern 3 aufgenommen. Die Hinterradachse 3′ ist starr, die Vorderradachse 2 ist pendelnd und gelenkt ausgebildet; beide Achsen 2′ und 3′ sind angetrieben und sind vorzugsweise Portalachsen, wie mit 4 und 5 angedeutet. Über der Vorderradachse 2′ ist die Fahrerkabine 6 angeordnet, die bei 7 mit dem Träger 1 fest verbunden ist; hinter der Fahrerkabine 6 ist die Motor-Getriebeeinheit 8 mit dem Träger bei 9 befestigt. Der Motor 8 ist quer zur Längsachse angeordnet, damit in Längsrichtung des Fahrzeuges der Platzaufwand für die Einheit 8 so gering wie möglich gehalten werden kann. In der Zeichnung ist mit 10 schematisch ein Rübenbunker angedeutet, der auf dem Träger 1 bei 11 und 12 befestigt ist. 11 und 12 sind vorzugsweise an sich bekannte Schnellwechseleinrichtungen, damit eine Aufsattelvorrichtung, wie z.B. der Rübenbunker 10 auf schnelle und einfache Weise durch eine andere Aufsattelvorrichtung ersetzt werden kann. Zur Aufnahme der Fahrerkabine 6, der Motor-Getriebeeinheit 8 und der Aufsattelvorrichtung 10 sind am Längsträger 1 Querstreben 13 angeschweißt, mit denen die Befestigungen 7, 9, 11, 12 verbunden sind.

Das Vorderende des Trägers 1 nimmt eine Dreipunktaufhängung 14 mit Zapfwelle auf, an der ein Rodegerät 15 oder eine andere Bergungs- bzw. Bearbeitungsmaschine mit dem Fahrzeug verbunden ist. Von der Maschine 15 wird das geernetete Gut z.B.über einen Förderer 16 nach rückwärts unter dem Längsträger 1 an eine Hochfördervorrichtung 17 gegeben, von der das Gut in den Bunker 10 übergeben wird.

Ein Mehrzweck-Fahrzeug der in der Zeichnung dargestellten Art hat einen Radstand von mindestens 3 m, die Vorderreifen haben einen Durchmesser kleiner als 1,6 m und eine Breite zwischen 0,6 und 0,9 m; die Hinterreifen haben einen Durchmesser von mehr 1,6 m und eine Breite zwischen 1,0 und 1,3 m. Der Längsträger ist vorzugsweise ein Metallprofilrahmen mit einem Querschnitt von 50 x 50 cm.

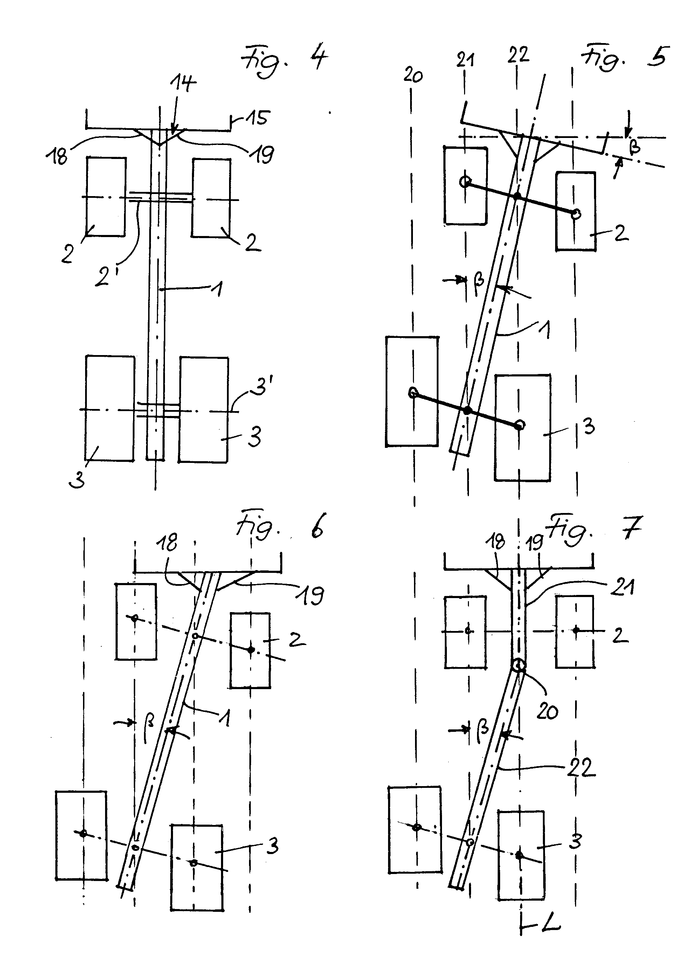

Fig. 4 zeigt schematisch das Mehrzweckfahrzeug nach der Erfindung mit dem Längsträger 1, den Vorderrädern 2 auf der Vorderradachse 2′, den Hinterrädern 3 auf der Hinterradachse 3′ und der Bearbeitungsmaschine 15, die über eine Dreipunktaufhängung 14 mit den Unterlenkern 18 und 19 vom Fahrzeug aufgenommen wird. Die (nicht dargestellten) Bearbeitungswerkzeuge des Bearbeitungsgerätes 15 sind parallel zur Fahrtrichtung bzw. zum Längsträger 1 angeordnet, die Vorderräder 2 und die Hinterräder 3 laufen in der gleichen Spur.

In Fig. 5 ist ein Einsatz des Fahrzeuges in der Weise dargestellt, daß die Hinterräder 3 gegenüber den Vorderrädern 2 um eine Furche versetzt sind; dies ist in der Weise bildlich dargestellt, daß mehrere Furchen 20, 21, 22, 23 nebeneinander angeordnet sind und daß die Vorderräder 2 in den Furchen 21 und 23 sowie die Hinterräder 3 in den Furchen 20 und 22 laufen, während der Rahmen bzw. Träger 1 des Fahrzeuges im Winkel β zur Fahrtrichtung angeordnet ist und das Bearbeitungsgerät 15 damit ebenfalls im Winkel 90° -β zur Fahrtrichtung arbeitet, also in einer Versetzung, die für eine einwandfreie Arbeitsweise nicht brauchbar ist.

Fig. 6 zeigt schematisch eine Lösung, mit der es möglich ist, das Bearbeitungsgerät trotz Winkelversetzung des Rahmens in der gewünschten Arbeitsstellung zu halten, in der die Werkzeuge parallel zur Längsachse bzw. Fahrtrichtung des Fahrzeuges angeordnet sind. Diese Lösung besteht darin, daß die beiden Unterlenker 18 und 19 längenverstellbar ausgebildet sind, so daß der eine Unterlenker 18 verkürzt und der andere Unterlenker 19 um die entsprechende Strecke verlängert werden kann, z.B. mit Hilfe von Hubzylindern.

Bei einer anderen Ausführungsform dieser Lösung nach Fig. 7 ist der Träger 1, der den Fahrzeugrahmen darstellt, mit einer Gelenkstelle 20 versehen, die den Träger 1 in einen vorderen Abschnitt 21 und einen hinteren Abschnitt 22 teilt. Der vordere Abschnitt 21 verläuft dabei in Fahrtrichtung, während der hintere Abschnitt 22 im Winkel β zur Fahrtrichtung angeordnet ist. Der Gelenkpunkt 20 kann beispielsweise auf der Vorderradachse 2′ oder zwischen Vorderradachse und Hinterradachse angeordnet sein.

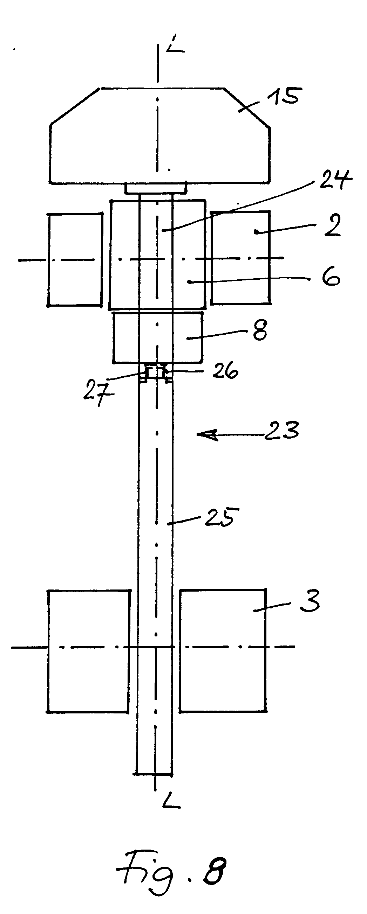

Die Ausführungsform nach Fig. 8 zeigt ein gegenüber den vorausgehenden Figuren abgeändertes Fahrzeug, dessen Trägerrahmen 23 hinter der Vorderradachse 2′ unterteilt ist, so daß ein vorderer Abschnitt 24 und ein hinterer Abschnitt 25 des Trägerrahmens 23 erhalten wird. Die beiden Abschnitte 24 und 25 sind gelenkig bei 26, 27 miteinander so verbunden, daß eine Verdrehung des einen Abschnittes gegenüber dem anderen um die Längsachse 28 möglich ist. Hierbei sind die Vorderradachse 2′, die Kabine 6 und die Motor-Getriebe-Einheit 8 als feste bzw. starre Einheit ausgebildet, so daß ein Auslenken der Gelenkachse 2′ aus der Zeichenebene bewirkt, daß diese Auslenkung auch von der Fahrerkabine und der Motor-Getriebe-Einheit ausgeführt wird. Damit läßt sich eine minimale Bauhöhe des Fahrzeuges erzielen, da der Abstand zwischen der Oberkante der Vorderräder und der Unterkante der Fahrerkabine bzw. der Motor-Getriebe-Einheit extrem klein gewählt werden kann.

## Patentansprüche

1. Landwirtschaftliches Mehrzweckfahrzeug, insbes. zum Ernten und Laden von Rüben, mit
einem Grundfahrzeug und einer Mehrzahl von getrennt aufnehmbaren und einsetzbaren Anbaugeräten (15) je nach den unterschiedlichen Einsatzzwecken,
angetriebener, lenkbarer Vorder- und Hinterradachse (2', 3') mit Breitreifen (2, 3) an den Rädern,
der Fahrerkabine (6) auf dem vorderen Ende sowie Wechselaufbauten (10) auf dem mittleren und dem hinteren Bereich des Fahrzeugrahmens, der sich kontinuierlich über im wesentlichen die gesamte Fahrzeuglänge erstreckt,
Heck- und Fronthydraulik, Heck- und Frontzapfwelle sowie Dreipunktaufnahme zumindest an der Frontseite des Fahrzeuges,
einer unmittelbar hinter dem Fahrerhaus (6) angeordneten Motor- und Getriebeeinheit (8),
einem Abstand zwischen Vorderachse (2') und Hinterachse (3') von mehr als 3 m, und
Schnellwechseleinrichtungen an Rahmen (1) und mit diesen verbundenen Aufbauten (10),
**gekennzeichnet durch** die Kombination folgender Merkmale:
a) der Rahmen (1) ist ein Hohlprofilrahmen in Form eines Torsionsträgers mit maximaler Breite von 50 cm,
b) die Motor- und Getriebeeinheit (8) ist auf dem Torsionsträger (1) quer zur Fahrzeuglängsachse (X-X) angeordnet befestigt,
c) die Vorderachse (2') des Fahrzeuges ist pendelnd, die Hinterachse (3') ist starr ausgebildet,
d) die Hinterradreifen (3, 3) haben einen Durchmesser von mindestens 1,6 m und eine Breite zwischen 0,9 und 1,3 m, die Vorderradreifen (2, 2) einen Durchmesser von maximal 1,6 m und sind schmaler als die Hinterradreifen, nämlich etwa 0,6 bis 0,9 mm.

2. Landwirtschaftliches Mehrzweckfahrzeug nach Anspruch 1, dadurch gekennzeichnet, daß die Motor-Getriebeeinheit (8) als Moduleinheit ausgebildet und austauschbar angeordnet ist.

3. Landwirtschaftliches Mehrzweckfahrzeug nach Anspruch 1 oder 2, dadurch gekennzeichnet, daß das Fahrzeug an seiner Vorderseite am Längsträger (1) befestigte Zapfwelle und Dreipunktaufhängung (14) zur Aufnahme von Arbeitsgeräten, z.B. Rübenernteeinrichtungen, aufweist, und auf der Rückseite am Längsträger (1) befestigte Zapfwelle und Dreipunktaufhängung besitzt, daß die beiden das Bearbeitungsgerät aufnehmenden Unterlenker längenverstellbar ausgebildet sind und daß das am Vorderende des Fahrzeuges von Unterlenkern aufgenommene Bearbeitungsgerät im Winkel zur Fahrzeuglängsachse verstellbar ausgebildet ist.

4. Landwirtschaftliches Mehrzweckfahrzeug nach Anspruch 1, dadurch gekennzeichnet, daß die Fahrzeugachsen (2', 3') als Portalachsen ausgebildet sind.

5. Landwirtschaftliches Mehrzweckfahrzeug nach einem der Ansprüche 1 - 4, dadurch gekennzeichnet, daß die Kombination aus Fahrerkabine (6) und Motor-Getriebeeinheit (8) über der Vorderachse (2') und die Aufbauten (10) im wesentlichen über der Hinterachse (3') angeordnet sind.

6. Landwirtschaftliches Mehrzweckfahrzeug nach Anspruch 1, dadurch gekennzeichnet, daß die Höhe des Rahmens (1) über dem Erdboden erheblich kleiner ist als der Durchmesser der Räder (2, 3)).

7. Mehrzweckfahrzeug nach Anspruch 1, dadurch gekennzeichnet, daß der vordere Abschnitt (21) des Fahrzeugrahmens (1) im Winkel zur Längsachse L des Fahrzeuges einstellbar ist.

8. Mehrzweckfahrzeug nach Anspruch 1, dadurch gekennzeichnet, daß Fahrerkabine (6), Motor-Getriebe-Einheit (8) und Vorderachse (2') als feste Einheit ausgebildet und als Einheit mit dem Träger (23) gelenkig (bei 26, 27) verbunden sind.

9. Mehrzweckfahrzeug nach Anspruch 8, dadurch gekennzeichnet, daß der Träger (23) in einen vorderen Abschnitt (24) und einen hinteren Abschnitt (25) unterteilt sind und daß an der Trennstelle eine koaxiale Lagerung (26, 27) vorgesehen ist, die in Achsrichtung L des Trägers (23) hinter der Einheit (2', 6, 8) angeordnet ist.

## Claims

1. Agricultural multipurpose vehicle, particularly for harvesting and loading beet, with a basic vehicle and a plurality of separately receivable and usable mounted implements (15), as a function of the different uses envisaged, driven, steerable front and rear wheel axles (2',3') with wide tyres (2,3) on the wheels, the driver's cab (6) is mounted on the front end and interchangeable structures (10) on the central and rear area of the vehicle frame, which extends continuously over substantially the entire vehicle length, tail and front hydraulics, tail and front power take-off shafts and three-point mounting at least at the front of the vehicle, a engine and gear unit (8) positioned directly behind the cab (6), a spacing of more than 3 m between the front axle (2') and the rear axle (3') and rapid replacement means on the frame (1) and the structures (10) connected thereto, characterized by the combination of the following features:
a) the frame (1) is a hollow profile frame in the form of a torsion beam with a maximum width of 50 cm,
b) the engine and gear unit (8) is fixed to the torsion beam (1) transversely to the vehicle longitudinal axis (X-X),
c) the vehicle front axle (2') oscillates, whereas the rear axle (3') is rigid,
d) the rear wheel tyres (3,3) have a diameter of at least 1.6m and a width between 0.9 and 1.3 m, the front wheel tyres (2,2) a diameter of max. 1.6m and are narrower than the rear wheel tyres, namely approximately 0.6 to 0.9 mm.

2. Agricultural multipurpose vehicle according to claim 1, characterized in that the engine-gear unit (8) is constructed as a modular unit and is interchangeable.

3. Agricultural multipurpose vehicle according to claim 1 or 2, characterized in that the vehicle has at its front and fixed to the longitudinal beam (1) a power take-off shaft and three-point suspension (14) for receiving working implements, e.g. beet harvesting means and has on its back, fixed to the longitudinal beam (1), a power take-off shaft and three-point suspension, that the two guide rods receiving the working implement are constructed in longitudinally adjustable manner and that on the front end of the vehicle the working implement received by the guide rods is constructed so that its angle to the vehicle longitudinal axis can be adjusted.

4. Agricultural multipurpose vehicle according to claim 1, characterized in that the vehicle axles (2',3') are constructed as gantry axles.

5. Agricultural multipurpose vehicle according to one of the claims 1 to 4, characterized in that the combination of driver's cab (6) and engine-gear unit (8) are located above the front axle (2') and the structures (10) substantially above the rear axle (3').

6. Agricultural multipurpose vehicle according to claim 1, characterized in that the height of the frame (1) above the ground is much smaller than the diameter of the wheels (2,3).

7. Agricultural multipurpose vehicle according to claim 1, characterized in that the angle of the front section (21) of the vehicle frame (1) to the vehicle longitudinal axis L is adjustable.

8. Agricultural multipurpose vehicle according to claim 1, characterized in that the cab (6), engine-gear unit (8) and front axle (2') are constructed as a fixed unit and as such are connected in articulated manner (at 26,27) to the beam (23).

9. Agricultural multipurpose vehicle according to claim 8, characterized in that the beam (23) is subdivided into a front section (24) and a rear section (25) and that at the junction point a coaxial bearing (26,27) is provided in the axial direction L of the beam (23) and behind the unit (2',6,8).

## Revendications

1. Véhicule agricole polyvalent, en particulier pour la récolte et le chargement de betteraves, avec
un véhicule de base et une majorité d'outils portés (15) pouvant être reçus et utilisés séparément selon les différents buts d'utilisation, un essieu avant et un essieu arrière (2', 3') entraînés et orientables avec des pneus larges (2, 3) sur les roues,
la cabine du conducteur (6) sur l'extrémité avant ainsi qu'une superstructure ou carrosserie échangeable (10) sur les régions médiane et arrière du châssis du véhicule qui s'étend de manière continue sur sensiblement toute la longueur du véhicule,
une hydraulique arrière et avant , une prise de force arrière et avant ainsi qu'un emplacement de réception à suspension à trois points au moins au côté avant du véhicule,
une unité à moteur et à boîte de vitesses (8) agencée directement derrière la cabine du conducteur (6),
une distance entre l'essieu avant (2') et l'essieu arrière (3') supérieure à 3 m, et
des installations d'échange rapide sur le châssis (1) et une superstructure ou une carrosserie (10) qui y est assemblée,
caractérisé par la combinaison des caractéristiques suivantes;
a) le châssis (1) est un châssis en corps creux sous forme d'un support de torsion avec une largeur maximale de 50 cm,
b) l'unité à moteur et à boîte de vitesses (8) est fixée sur le support de torsion (1) transversalement à l'axe longitudinal du véhicule (X-X),
c) l'essieu avant (2') du véhicule est agencé oscillant, l'essieu arrière (3') est agencé rigide,
d) les pneus des roues arrière (3, 3) ont un diamètre d'au moins 1,6 m et une largeur comprise entre 0,9 et 1,3 m, les pneus des roues avant (2, 2) un diamètre de 1,6 m au maximum et sont plus étroits que les pneus des roues arrière, à savoir d'environ 0,6 à 0,9 mm.

2. Véhicule agricole polyvalent selon la revendication 1 caractérisé en ce que l'unité à moteur et à boîte de vitesses (8) est réalisée sous forme d'unité modulaire et est disposée de manière échangeable.

3. Véhicule agricole polyvalent selon la revendication 1 ou 2 caractérisé en ce que le véhicule comporte à son côté avant une prise de force et une suspension à trois points (14) fixées sur le support longitudinal (1) pour la réception d'outils de travail, par exemple d'installations de récolte de betteraves, et qu'il possède une prise de force et une suspension à trois points fixée sur le côté postérieur au support longitudinal (1), les deux bras oscillants inférieurs recevant l'outil de travail sont réalisés réglables en longueur et l'outil de travail reçu à l'extrémité avant du véhicule par des bras oscillants inférieurs est réalisé de manière à pouvoir être réglé quant à l'angle par rapport à l'axe longitudinal.

4. Véhicule agricole polyvalent selon la revendication 1 caractérisé en ce que les essieux du véhicule (2', 3') sont agencés sous forme d'essieux-portiques.

5. Véhicule agricole polyvalent selon l'une des revendications 1 à 4 caractérisé en ce que la combinaison formée par la cabine du conducteur (6) et l'unité à moteur et à boîte de vitesses (8) est disposée au-dessus de l'essieu avant (2') et la carrosserie ou superstructure (10) sensiblement au-dessus de l'essieu arrière (3').

6. Véhicule agricole polyvalent selon la revendication 1 caractérisé en ce que le hauteur du châssis (1) au-dessus du sol est notablement inférieure au diamètre des roues (2, 3).

7. Véhicule polyvalent selon la revendication 1 caractérisé en ce que la partie avant (21) du châssis du véhicule (1) est réglable quant à l'angle par rapport à l'axe longitudinal L du véhicule.

8. Véhicule polyvalent selon la revendication 1 caractérisé en ce que la cabine du conducteur (6), l'unité à moteur et à boîte de vitesses (8) et l'essieu avant (2') sont réalisés sous forme d'unité rigide et sont articulés (en 26, 27) comme une unité sur le support (23).

9. Véhicule polyvalent selon la revendication 8 caractérisé en ce que le support (23) est divisé en une partie avant (24) et une partie arrière (25) et à l'emplacement de séparation on prévoit un logement coaxial (26, 27) qui est disposé derrière l'unité (2', 6, 8) en direction de l'axe L du support (23).
